# EUROPÄISCHE PATENTSCHRIFT

(11) **EP 1 033 561 B1**
(45) Veröffentlichungstag und Bekanntmachung des Hinweises auf die Patenterteilung: **31.07.2002**
(21) Anmeldenummer: 00102537.8
(22) Anmeldetag: 07.02.2000
(51) Int. Cl.: G01L 1/22

(54) **Dehnungsmessstreifen für Messgrössenaufnehmer**
Foil strain gauge for a measuring transducer
Jauge d'allongement pour transducteur de mesure

(30) Priorität: 02.03.1999 DE 19909042
(43) Veröffentlichungstag der Anmeldung: 06.09.2000
(73) Patentinhaber: Hottinger Baldwin Messtechnik GmbH, 64293 Darmstadt (DE)
(72) Erfinder: Burfeindt, Helmut, 64380 Rossdorf (DE); Gerlach, Hans-Joachim, 64739 Höchst (DE); Will, Ronald, 64665 Alsbach-Hähnlein (DE)
(74) Vertreter: Behrens, Helmut, Dipl.-Ing.

(56) Entgegenhaltungen:
- FR-A- 2 667 150
- US-A- 5 192 938

## Beschreibung

Die Erfindung betrifft einen Dehnungsmeßstreifen für Meßgrößenaufnehmer, insbesondere für axial belastbare stabförmige Aufnehmer, gemäß dem Oberbegriff des Patentanspruchs 1.

Durch die Neu- und Weiterentwicklung von Werkstoffen sowie deren Behandlungsverfahren konnten die Eigenschaften bezüglich der Anforderungen für die Herstellung von Meßfedern für Wägezellen und Kraftaufnehmer deutlich gesteigert werden. Wesentliche Anforderungen sind hier reproduzierbare und zeitlich konstantes Verhalten des Verformungskörpers und des darauf applizierten Dehnungsmeßstreifens. Die Verwendung eines Werkstoffes mit geringstem Eigenkriechen und reproduzierbarem Verhalten ist dabei Voraussetzung zum Bau eines guten Aufnehmers.

Praktisch hat jeder Meßfederwerkstoff ein mehr oder weniger großes positives Eigenkriechen unter mechanischer Belastung. Bei einer derartigen Belastung wird die Dehnung des Meßfederwerkstoffs auf den applizierten Dehnungsmeßstreifen übertragen, der aus einem auf einer Trägerschicht angeordneten mäanderförmigen Meßgitter aus Metallfolie besteht. Dieser Dehnungsmeßstreifen hat ebenfalls ein Eigenkriechen, das unter Belastung negatives Vorzeichen hat. Das Verhalten des Federkörpers und das Verhalten der Dehnungsmeßstreifen sind nun so aufeinander abzustimmen, daß sie sich idealerweise genau kompensieren, so daß möglichst ein Meßfehler vermieden wird. Dazu muß das Eigenkriechen des Dehnungsmeßstreifens auf das Eigenkriechen des Meßfederwerkstoffs abgestimmt werden. Idealerweise muß das Kriechverhalten des Dehnungsmeßstreifens den gleichen zeitlichen Verlauf mit umgekehrten Vorzeichen aufweisen, wie das Kriechverhalten des Meßfederwerkstoffs.

Aus der EP 0 451 636 A1 ist ein Dehnungsmeßstreifen mit besonders geringem Kriechfehler bekannt. Dieser Dehnungsmeßstreifen besteht aus einer Trägerschicht, auf die ein mäanderförmiges Meßgitter aus einer Widerstandsfolie aufgeklebt ist. Dabei besteht die Trägerfolie aus einer bestimmten Kunststoffolie, durch die insbesondere ein temperaturabhängiges Eigenkriechverhalten des Dehnungsmeßstreifens verbessert wird.

Allerdings hängt das Eigenkriechverhalten nicht nur von dem verwendeten Werkstoff des Meßgitters, des Trägers und der Verbindungsstoffe ab, so daß das Eigenkriechen schon aufgrund der geometrischen Gestaltung des mäanderförmigen Meßgitters ein ungünstiges Eigenkriechverhalten aufweisen kann.

Der Kriechvorgang u. a. auch durch den relativ eng begrenzten Bereich der Meßgitterenden bestimmt wird, kann er durch konstruktive Änderungen in diesem Bereich beeinflußt werden. So ist es in der Praxis bekannt, das Kriechverhalten dadurch zu beeinflussen, daß die Länge der Umkehrstellen in Mäanderrichtung im Verhältnis zur Stegbreite des Meßgitters variiert wird. Mit steigender Umkehrstellenlänge nimmt aber die Wirksamkeit dieser Maßnahme ab, so daß in der Regel bei einer bestimmten Umkehrstellenlänge keine nennenswerte Verbesserung mehr zu erreichen ist. Deshalb wurden bisher lediglich Dehnungsmeßstreifen zur Verringerung des Kriechens angeboten, deren Umkehrstellenlänge höchstens dem 12fachen der Stegbreite entsprach. Nun ist bei bestimmten Meßkörperformen wie bei Stabtypen mit axialer Belastung und bei bestimmten Meßfedermaterialien das positive Eigenkriechen im Verhältnis zum negativen Eigenkriechen der vorhandenen Dehnungsmeßstreifenbauarten zur genauen Kompensation zu gering, so daß ein restlicher Kriechfehler verbleibt.

Der Erfindung liegt deshalb die Aufgabe zugrunde, einen Dehnungsmeßstreifen der eingangs genannten Art so zu verbessern, daß dessen Kriechverhalten minimiert wird und dies unter geringstem konstruktiven Aufwand.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß die erfinderischen Dehnungsmeßstreifen insbesondere für neuartige Meßfedermaterialien und/oder axial belastbare stabförmige Meßfederformen mit sehr geringen Eigenkriechverhalten einsetzbar sind. Deshalb sind bei Verwendung derartigen Materialien und Meßfederformen auf einfache Art und Weise auch eichfähige Wägezellenqualitäten herstellbar, die sonst nur durch aufwendige konstruktive Maßnahmen erreichbar wären.

Die Erfindung wird anhand eines Ausführungsbeispiels, das in der Zeichnung dargestellt ist, näher erläutert. Es zeigen:
- Fig. 1:: einen Dehnungsmeßstreifen nach dem Stand der Technik, und
- Fig. 2:: einem schematischen Dehnungsmeßstreifen mit verbessertem Kriechverhalten.

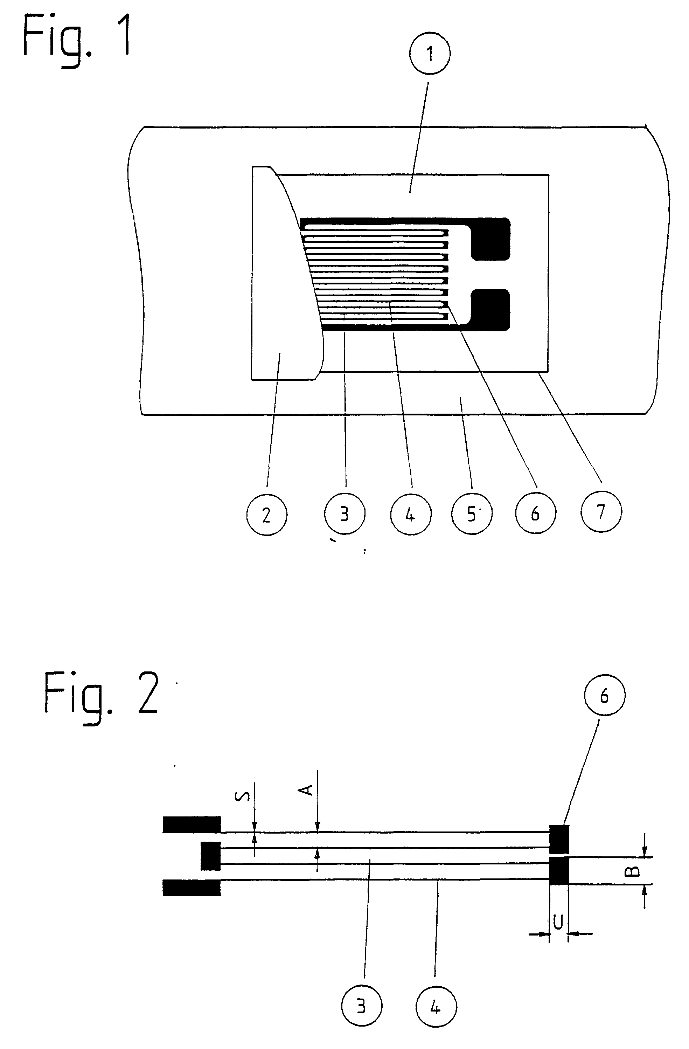

In Fig. 1 der Zeichnung ist ein Dehnungsmeßstreifen 7 eines Meßgrößenaufnehmers nach dem Stand der Technik dargestellt, der auf einem Meßfederkörper 5 appliziert ist. Auf einer Trägerschicht 1 ist ein mäanderförmiges Meßgitter 3 aus einer Widerstandsfolie aufgebracht, die mit einer teilweise dargestellten Deckschicht 2 überzogen wird. Derartige Dehnungsmeßstreifen besitzen häufig einen elektrischen Widerstandswert von 350 Ω, der sich bei einer mechanischen Beanspruchung des Meßfederkörpers 5 proportional zur Dehnung ändert und somit ein entsprechendes elektrisches Signal liefert. Um eine möglichst präzise Widerstandsänderung bei einer mechanischen Dehnung des Meßfederkörpers zu erzielen, sind die mäanderförmigen Meßgitterstege 4 in größerer Anzahl parallel nebeneinander angeordnet. Die Widerstandsfolie, die aus einer Kupfer-Nickel-Legierung (Konstantan) oder Nickel-Chrom-Legierung (Karma) besteht, besitzt eine Foliendicke von etwa 3 bis 5 µm. Dabei ist das gesamte Meßgitter 3 meist in einer Länge von 3 bis 6 mm und einer Stegbreite S von 30 bis 50 µm ausgebildet. Zwischen den Stegen 4 ist ein Abstand A vorgesehen, der in der Regel ein bis drei Stegbreiten S entspricht. Die Umkehrstellen 6 der Stege 4 besitzen eine Breite von zwei Stegbreiten S plus dem dazwischenliegenden Abstand A.

Zur Verbesserung des Kriechverhaltens des Dehnungsmeßstreifens ist die Länge der Umkehrstellen 6 meist um ein Vielfaches länger als die Stegbreite S. Dies folgt daraus, daß das gedehnte Meßgitter 3 ähnlich einer gespannten Feder wirkt. Die Federkraft erzeugt auch im Bereich der Umkehrstellen 6 des Meßgitters 3 Schubspannungen an den Berührungsflächen zwischen Meßgitter 3 und der Trägerschicht 1, zusätzlich zu der aus der Dehnung resultierenden Normalspannung. Unter dem Einfluß dieser Spannungen relaxieren die Kunststoffe des Dehnungsmeßstreifens und des Klebstoffs, d. h. die Gegenkraft erlahmt und das Meßgitter 3 zieht sich zurück. Es entsteht ein negativer Fehler. Weil sich dieser Vorgang auch in einem begrenzten Bereich der Meßgitterenden abspielt, kann er an diesen Umkehrstellen beeinflußt werden. Deshalb wird in der Regel eine Umkehrstellenlänge U von 5 bis 8 Gitterstegbreiten S vorgesehen. In besonderen Ausführungen von Dehnungsmeßstreifen werden auch bis zu 12 Gitterstegbreiten S als Umkehrstellenlänge U ausgeführt. Dies aber meist nur bei verhältnismäßig kurzen Gitterlängen, da dort der Kriecheinfluß größer ist als bei langen Meßgittern.

In Fig. 2 der Zeichnung ist eine Ausführungsform eines Meßgitters 3 mit minimiertem Kriechverhalten schematisch dargestellt. Dieser Dehnungsmeßstreifen unterscheidet sich von dem nach Fig. 1 durch die spezielle Ausgestaltung der Umkehrstellen 6 und der relativ schmalen Stegbreite S des Meßgitters 3. Zur Verbesserung der Übersichtlichkeit sind nur vier Meßgitterstege 4 mit den zugehörigen drei Umkehrstellen 6 dargestellt. Für die funktionsgleichen Meßgitterteile sind dieselben Bezugsziffern wie in Fig. 1 der Zeichnung verwandt.

Der in Fig. 2 dargestellte Dehnungsmeßstreifen besitzt relativ schmale Meßgitterstege 4 von 25 µm. Es können aber auch Stegbreiten S von ca. 20 bis 30 µm vorgesehen werden. Dadurch wird eine möglichst geringe Schubspannung in dem Umkehrstellenbereich erreicht, die das Kriechverhalten verringert und eine große Steganzahl auf einer bestimmten Dehnungsfläche ermöglicht. Im Verhältnis zur Stegbreite S ist eine Umkehrstellenlänge U von mehr als der zwölffachen Stegbreite S vorgesehen. Als vorteilhaft hat sich eine Umkehrstellenlänge U = 15 x S erwiesen. Bei anderen Ausgestaltungen können auch größere Verhältnisse vorgesehen werden.

Zur Verbesserung des Kriechverhaltens hat sich überraschenderweise insbesondere auch eine verhältnismäßig große Umkehrstellenbreite B erwiesen, durch dir der Einfluß der Schubspannung an den Stegenden besonders vorteilhaft klein gehalten werden kann. Dazu ist eine Umkehrstellenbreite B von mindestens der sechsfachen Stegbreite S vorgesehen. Besonders vorteilhaft sind Umkehrstellenbreiten B, die zwischen dem sechs- und fünfzehnfachen der Stegbreite S liegen. Dabei sind die Umkehrstellen quadratisch oder rechteckig ausgebildet. Es können aber auch runde Umkehrstellenausbildungen vorgesehen werden. Dabei kann die Umkehrstellenbreite B auch größer als der Abstand A zwischen den Stegen 3 sein. Dies wirkt sich besonders vorteilhaft auf das Kriechverhalten aus, da die von den Enden der Meßgitterstege 4 erzeugten Schubspannungen symmetrisch in die Umkehrstellen 6 eingeleitet werden und so das Kriechverhalten günstig beeinflussen. Dabei können Umkehrstellenbreiten B gewählt werden, die fast dem doppelten Abstand A entsprechen. Es muß lediglich ein geringer Isolationsabstand zwischen den Umkehrstellen 6 vorgesehen werden. Dadurch wird gleichzeitig eine gute Ausnutzung des Dehnungsraumes erreicht, da die Abstände zwischen den Umkehrstellen 6 und den Stegen 3 minimiert sind. Allerdings kann die Umkehrstellenbreite B auch gleich dem Abstand A minus den beiden Stegbreiten S gewählt werden.

Es sind auch andere Ausgestaltungen der Umkehrstellen 6 denkbar, durch die verhältnismäßig kleine Kräfte in eine relativ große Umkehrstellenfläche so eingeleitet werden, daß nur eine geringe Schubspannung auf die Umkehrstellen 6 wirkt.

Diese Dehnungsmeßstreifen sind insbesondere für axialbelastbare stabförmige Meßkörperformen vorgesehen, die konstruktionsbedingt ein sehr geringes positives Eigenkriechverhalten aufweisen. Dabei wird dieses geringe Kriechverhalten noch dadurch verringert, wenn für die Meßkörperformen neuartige verbesserte Federmaterialien verwandt werden. Beiderartigen Aufnehmerausführungen kann das geringe positive Eigenkriechverhalten in vorteilhafter Weise durch ein besonders geringes negatives Eigenkriechverhalten der Dehnungsmeßstreifen kompensiert werden.

## Patentansprüche

1. Dehnungsmeßstreifen für Meßgrößenaufnehmer, insbesondere für axial belastbare stabförmige Aufnehmer, mit einem auf einer Trägerschicht angeordneten mäanderförmigen Meßgitter aus Meßgitterstegen, deren Umkehrstellen in Längsund Querrichtung ein Vielfaches länger und breiter sind als die Meßgitterstegbreite (S), **dadurch gekennzeichnet, daß** das Verhältnis der Umkehrstellenlänge (U) zu der Meßgitterstegbreite (S) größer als 12 und das Verhältnis der Umkehrstellenbreite (B) zu der Meßgitterstegbreite (S) größer als 6 ist.

2. Dehnungsmeßstreifen nach Anspruch 1, **dadurch gekennzeichnet, daß** die Umkehrstellen (6) quadratisch, rechteckig, rund oder in einer davon abgewandelten Form ausgebildet sind.

3. Dehnungsmeßstreifen nach Anspruch 1 oder 2, **dadurch gekennzeichnet, daß** die Umkehrstellenbreite (B) größer als der Abstand (A) ist, wobei die Enden der Meßgitterstege (3) symmetrisch zu einer gedachten Mittellinie der Umkehrstellen (6) angeordnet sind.

4. Dehnungsmeßstreifen nach einem der vorhergehenden Ansprüche, **dadurch gekennzeichnet, daß** die Umkehrstellenbreite (B) dem doppelten Abstand (A) minus zwei Stegbreiten (S) und minus einem Isolationsabstand entspricht.

5. Dehnungsmeßstreifen nach einem der vorhergehenden Ansprüche, **dadurch gekennzeichnet, daß** die Umkehrstellen (6) so ausgebildet sind, daß nur verhältnismäßig kleine Kräfte in die Umkehrstellenflächen eingeleitet werden, wobei diese so auf den Meßfederkörper (5) abgestimmt sind, daß das negative Kriechverhalten des Dehnungsmeßstreifens dem positiven Kriechverhalten des Meßfederkörpers (5) entspricht.

## Claims

1. Strain gauge for measured quantity transducers, in particular for axially loadable bar-shaped transducers, comprising a meandering measurement grid disposed on a carrier layer and composed of measurement grid webs, the turning points of which are a plurality of times longer in longitudinal direction and wider in transverse direction than the measurement grid web width (S), **characterized in that** the ratio of the turning point length (U) to the measurement grid web width (S) is greater than 12 and the ratio of the turning point width (B) to the measurement grid web width (S) is greater than 6.

2. Strain gauge according to claim 1, **characterized in that** the turning points (6) are constructed square, rectangular, round or in a shape modified therefrom.

3. Strain gauge according to claim 1 or 2, **characterized in that** the turning point width (B) is greater than the spacing (A), wherein the ends of the measurement grid webs (3) are disposed symmetrically relative to an imaginary centre line of the turning points (6).

4. Strain gauge according to one of the preceding claims, **characterized in that** the turning point width (B) corresponds to twice the spacing (A) minus two web widths (S) and minus an insulation clearance.

5. Strain gauge according to one of the preceding claims, **characterized in that** the turning points (6) are constructed in such a way that only relatively low forces are introduced into the turning point surfaces, wherein the latter are matched to the measuring spring body (5) in such a way that the negative creep characteristic of the strain gauge corresponds to the positive creep characteristic of the measuring spring body (5).

## Revendications

1. Jauge d'allongement pour transducteurs de grandeurs de mesure, en particulier pour transducteurs en forme de barreaux pouvant supporter une charge axiale, comportant une grille de mesure en forme de méandres disposée sur une couche de support et constituée de traverses, dont les points d'inversion dans la direction longitudinale et la direction transversale sont plusieurs fois plus longs et plus larges que la largeur (S) des traverses de la grille de mesure, **caractérisée en ce que** le rapport entre la longueur (U) des points d'inversion et la largeur (S) des traverses de la grille de mesure est supérieur à 12 et le rapport entre la largeur (B) des points d'inversion et la largeur (S) des traverses de la grille de mesure est supérieur à 6.

2. Jauge d'allongement selon la revendication 1, **caractérisée en ce que** les points d'inversion (6) sont carrés, rectangulaires, circulaires ou présentent une forme différente de celles-ci.

3. Jauge d'allongement selon la revendication 1 ou 2, **caractérisée en ce que** la largeur (B) des points d'inversion est supérieure à la distance (A), les extrémités des traverses (3) de la grille de mesure étant disposées symétriquement par rapport à une ligne médiane imaginaire des points d'inversion (6).

4. Jauge d'allongement selon l'une des revendications précédentes, **caractérisée en ce que** la largeur (B) des points d'inversion correspond au double de la distance (A) diminuée de deux largeurs de traverse (S) et diminuée d'une distance d'isolation.

5. Jauge d'allongement selon l'une des revendications précédentes, **caractérisée en ce que** les points d'inversion (6) sont conformés de manière que des forces relativement petites seulement soient introduites dans les surfaces des points d'inversion, celles-ci étant adaptées au corps élastique de mesure (5) de manière que le comportement négatif au fluage de la jauge d'allongement corresponde au comportement positif au fluage du corps élastique de mesure (5).
